# EUROPÄISCHE PATENTSCHRIFT

(11) **EP 2 178 173 B1**
(45) Veröffentlichungstag und Bekanntmachung des Hinweises auf die Patenterteilung: **30.08.2017**
(21) Anmeldenummer: 08017999.7
(22) Anmeldetag: 14.10.2008
(51) Int. Cl.: H01R 13/00, H02G 11/00

(54) **Schlauchbandverbinder**
Hose reel connector
Connecteur de bande de gaine

(43) Veröffentlichungstag der Anmeldung: 21.04.2010
(73) Patentinhaber: BAUER Maschinen GmbH, 86529 Schrobenhausen (DE)
(72) Erfinder: Arzberger, Maximilian, 86568 Igenhausen (DE); Herrmann, Christian, 85250 Altomünster (DE)
(74) Vertreter: Wunderlich, Rainer

(56) Entgegenhaltungen:
- EP-A- 0 654 852
- DE-U1-202005 018 236
- US-A- 3 673 541

## Beschreibung

Die Erfindung betrifft einen Schlauchbandverbinder zum Verbinden von Schlauchbandstücken, welche jeweils mehrere bandartig angeordnete Schläuche für Leitungen aufweisen, gemäß dem Oberbegriff des Patentanspruchs 1.

Ein derartiger Steckverbinder, der eine Verbindung für sowohl eine elektrische Leitung als auch für eine Fluidleitung ermöglicht, ist aus der EP 0 654 852 A1 bekannt.

Aus der EP 0 518 292 B1 geht eine Schlitzwandfräse mit einer Schlauchbandleitung hervor, welche aus Schlauchbandstücken mittels Schlauchbandverbinder aufgebaut ist. An den beiden Verbindungsseiten der leistenförmigen Schlauchbandverbinder werden die jeweiligen Anschlussstücke der Fluidleitungsschläuche angeflanscht.

Derartige Schlauchbandverbinder umfassen einen Flanschträger, welcher eine erste Verbindungsseite und eine zweite Verbindungsseite aufweist, zwischen welchen Durchgänge zur Leitungsverbindung ausgebildet sind, und Befestigungseinrichtungen an der ersten Verbindungsseite und der zweiten Verbindungsseite zum Anflanschen der Schläuche der Schlauchbandstücke.

Die bandartige Anordnung der einzelnen Fluidschläuche erlaubt eine gleichmäßige Zuführung der Fluidschläuche zu der Schlitzwandfräse, wobei eine unerwünschte Ablenkung der Fräse durch eine unterschiedliche Betätigung der relativ schweren Fluidschläuche vermieden wird. Dies ist für ein exaktes Ausfräsen eines Schlitzes vorteilhaft.

Parallel zu dem Schlauchband, jedoch beabstandet hierzu, werden noch andere Schläuche oder Kabel geführt, so etwa die Schlauchleitung zum Abfördern des abgefrästen Bodenmaterials sowie das Tragseil.

Weiter geht aus der US 3 673 541 A ein Verbindungsstecker für eine elektrische Leitung und eine Fluidleitung hervor. Hierbei werden zwei Verbindungsteile durch einen Federverschluss miteinander verbunden und mit einem kompressiblen Dichtungsring abgedichtet.

Der Erfindung liegt die Aufgabe zugrunde, einen Schlauchbandverbinder dahingehend zu verbessern, dass ein Schlauchband mit verbesserten Einsatzeigenschaften erreicht wird.

Die Aufgabe wird nach der Erfindung durch einen Schlauchbandverbinder mit den Merkmalen des Anspruchs 1 gelöst. Bevorzugte Ausführungsformen der Erfindung sind in den abhängigen Ansprüchen angegeben.

Bei dem erfindungsgemäßen Schlauchbandverbinder ist vorgesehen, dass an dem Flanschträger mindestens eine Aufnahme für eine Steckverbindung zwischen einer ersten elektrischen Leitung und einer zweiten elektrischen Leitung ausgebildet ist. Hierdurch wird ermöglicht, dass auch elektrische Leitungen in dem Schlauchband angeordnet werden können und gleichzeitig eine Möglichkeit geschaffen ist, bei einer Beschädigung der elektrischen Leitung ohne Abrollen der gesamten Schlauchleitungen ein Schlauchbandstück mit der elektrischen Leitung auszuwechseln.

Zum Herstellen oder Lösen der Steckverbindung ist es nach der Erfindung vorgesehen, dass am Flanschträger ein Abdeckglied vorgesehen ist, welches zwischen einer Verschlussposition, in welcher die elektrische Steckverbindung abgedeckt ist, und einer Freigabeposition bewegbar ist, in welcher die Steckverbindung freiliegt. Bisher waren elektrische Leitungen aufgrund des geringen Gewichtes und der relativ günstigen Kosten stets als eine durchgehende Leitung etwa zwischen einer Schlitzwandfräse und einem Grundgerät angeordnet. Bei Beschädigung musste das ganze Leitungssystem der Fräse über die gesamte Länge ausgerollt werden, um die elektrische Leitung zu wechseln. Dies ist zeitaufwändig und führt zu einem entsprechend langem Stillstand der Fräse.

Mit der erfindungsgemäßen Anordnung ist eine elektrische Leitung nunmehr in das Schlauchband unmittelbar integrierbar. Hierdurch wird die Gefahr von Beschädigungen herabgesetzt. Gleichzeitig besteht weiterhin die Möglichkeit, Schlauchbandstücke im Falle einer Beschädigung sowohl eines Fluidschlauches oder der elektrischen Leitung segmentweise auszuwechseln.

Unter einer elektrischen Leitung im Sinne der Erfindung sind nicht nur Leitungen zur elektrischen Energieversorgung, sondern auch Datenleitungen oder Kombinationen hieraus zu verstehen. Insgesamt umfasst der Begriff der elektrischen Leitung auch andere Leitungen, etwa Lichtwellenleiter, beispielsweise Glasfaserkabel, oder auch andere Daten- und Energieversorgungsleitungen mit Steckverbindung.

Nach der Erfindung ist es bevorzugt, dass die Aufnahme zum Aufnehmen eines Steckers der ersten elektrischen Leitung und eines Gegensteckers der zweiten elektrischen Leitung ausgebildet ist. Der Aufnahme kann insbesondere eine Bohrung oder eine sonstige Aufnahme in dem leistenförmigen Flanschträger sein. Die Aufnahme kann grundsätzlich selbst Steckeinrichtungen aufweisen, so dass die entsprechenden Stecker der anzuschließenden elektrischen Leitungen direkt einsteckbar sind. Bevorzugt stellt die Aufnahme jedoch einen Aufnahmeraum dar, in welchem ein Stecker und ein Gegenstecker, welche jeweils fest mit den elektrischen Leitungen verbunden sind, aufgenommen werden können. Bei einem Ausbau verbleiben so der Stecker und der Gegenstecker unmittelbar an den elektrischen Leitungen. Die Stecker können als Koaxialstecker, Flachbandstecker oder anderweitig ausgebildet sein. Es ist bevorzugt, dass die Steckverbindung eine Überwurfmutter zum Verbinden von Stecker und Gegenstecker umfasst, wobei die Überwurfmutter in der Freigabeposition des Abdeckgliedes betätigbar ist. Eine Überwurfmutter ist ein übliches und zuverlässiges Verbindungs- und Sicherungselement für zylindrische oder im Wesentlichen rotationssymmetrische Energie- und Datenleitungen. Hierzu ist an einem Verbindungselement ein Außengewinde vorgesehen, welches mit der am anderen Verbindungselement angeordneten Überwurfmutter in Eingriff bringbar ist. Eine Überwurfmutter ist insbesondere bei einer Steckverbindung sinnvoll, für welche eine axiale Steckbewegung zum Herstellen bzw. Lösen der Steckverbindung notwendig ist. Eine besonders kompakte Ausgestaltung der Erfindung ergibt sich dadurch, dass das Schiebeglied eine Hülse mit einem ringförmigen Kragen aufweist und dass das Abdeckglied verschiebbar in einer Ausnehmung im Flanschträger gelagert ist. So kann das Abdeckglied als ein Schiebeglied in der Freigabeposition in den Flanschträger hineingeschoben werden, während durch Herausziehen aus dem Flanschträger das Schiebeglied in die Verschlussposition gelangt, in welcher das Schiebeglied die elektrische Steckverbindung umschließt und so radial nach außen hin abdeckt. Es ist bevorzugt, dass das Abdeckglied in der Verschlussposition durch eine Abstandshalterung gehalten ist, welche zwischen dem Flanschträger und dem ringförmigen Kragen angeordnet ist. Die Abstandshalterung kann dabei insbesondere ein geteilter Ring sein, welcher das Abdeckglied in der Verschlussposition umschließt und zusätzlich schützt. Die Befestigung kann durch den Kragen des Abdeckgliedes und durch die Abstandshalterung hindurch an dem Flanschträger erfolgen.

Besonders vorteilhaft ist es dabei, dass an dem Abdeckglied eine Befestigungseinrichtung für eine elektrische Leitung vorgesehen ist. Auf diese Weise kann eine mechanische Befestigung der elektrischen Leitung am Flanschträger erfolgen. Hierdurch wird eine zusätzliche Stabilität für die elektrische Leitung erreicht.

Eine besonders vorteilhafte Weiterbildung der Erfindung ergibt sich dadurch, dass die Befestigungseinrichtung für die elektrische Leitung der Befestigungseinrichtung für die Schläuche für Fluidleitungen entspricht. Die Befestigungseinrichtungen sind insbesondere dafür ausgelegt, Standard-Flanschelemente, sogenannte SAE-Flansche, zu haltern. Hierzu sind die Befestigungseinrichtungen als entsprechende Bohrungen mit Innengewinden ausgebildet. Die Flanschelemente sind insbesondere halbringförmige Befestigungselemente, welche entsprechende Anschlussstücke an den Leitungen und Schläuchen umschließen. Durch die gleiche Ausgestaltung der Befestigungseinrichtungen wird deren Herstellung vereinfacht und es können unabhängig davon, ob es sich um Leitungen oder Schläuche handelt, die gleichen Befestigungselemente verwendet werden.

Nach der Erfindung ist des Weiteren ein Schlauchband aus mindestens zwei Schlauchbandstücken mit mehreren bandartig angeordneten Schläuchen vorgesehen, wobei die Schlauchbandstücke mit einem Schlauchbandverbinder miteinander verbunden sind, welche den vorbeschriebenen erfindungsgemäßen Schlauchbandverbindern entsprechen, dass mindestens eine erste elektrische Leitung und eine zweite elektrische Leitung vorgesehen sind, welche über eine Steckverbindung miteinander verbunden sind, und dass die Steckverbindung in einer Aufnahme an dem Flanschträger angeordnet ist.

Weiter ist es nach der Erfindung bevorzugt, dass die Schläuche für Fluidleitungen jeweils an ihren Enden Anschlussstücke aufweisen, welche mit Flanschelementen an dem Flanschträger befestigbar sind. Die Anschlussstücke können insbesondere kragenförmige Elemente sein, welche formschlüssig von ringförmigen oder teilringförmigen Flanschelementen umgriffen werden. Das Anflanschen kann dann in bekannter Weise durch entsprechende Befestigungsschrauben in Gewindebohrungen am Flanschträger erfolgen.

Eine besonders robuste Anordnung ergibt sich nach der Erfindung dadurch, dass zumindest eine elektrische Leitung von einem Schlauch mit einem Anschlussstück umgeben ist, welches mit einem Flanschelement befestigbar ist. Die eigentliche elektrische Leitung kann insbesondere in einem Schlauch vorgesehen sein, welcher einem Fluidschlauch entspricht. Die Hülle des Schlauches stellt somit einen zusätzlichen Schutz der elektrischen Kabel gegenüber Beschädigungen dar, was insbesondere bei einem Einsatz an Baumaschinen, insbesondere bei Schlitzwandfräsen vorteilhaft ist.

Die Erfindung wird nachfolgend anhand von bevorzugten Ausführungsbeispielen beschrieben, welche schematisch in den beigefügten Zeichnungen dargestellt sind. In den Zeichnungen zeigen:
- Fig. 1: eine perspektivische Teilansicht eines erfindungsgemäßen Schlauchbandes;
- Fig. 2: eine Draufsicht auf das erfindungsgemäße Schlauchband gemäß Fig. 1;
- Fig. 3: eine vergrößerte Querschnittsansicht des Schnittes A-A von Fig. 2;
- Fig. 4: eine vergrößerte Querschnittsansicht eines erfindungsgemäßen Schlauchbandverbinders mit einer geschlossenen elektrischen Leitung;
- Fig. 5: die Anordnung gemäß Fig. 4 mit entfernter Abstandshalterung;
- Fig. 6: die Anordnung von Fig. 4 und 5 mit rückgezogenem Abdeckglied; und

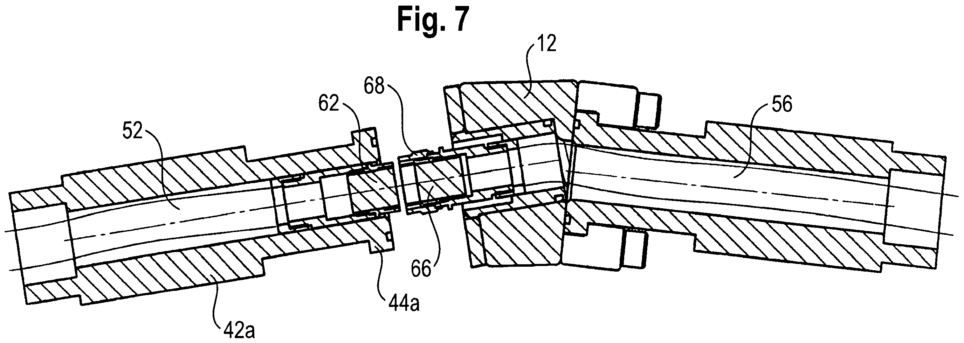

- Fig. 7: die Anordnung der Figuren 4 bis 6 mit gelöster Steckverbindung.

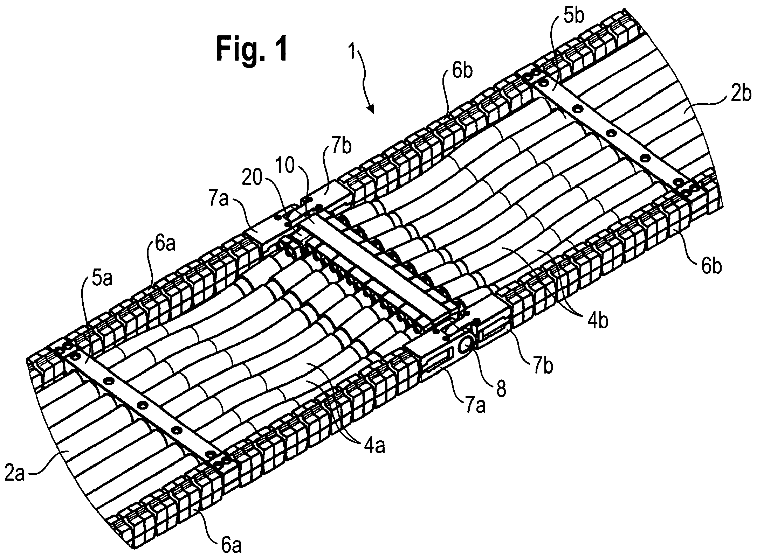

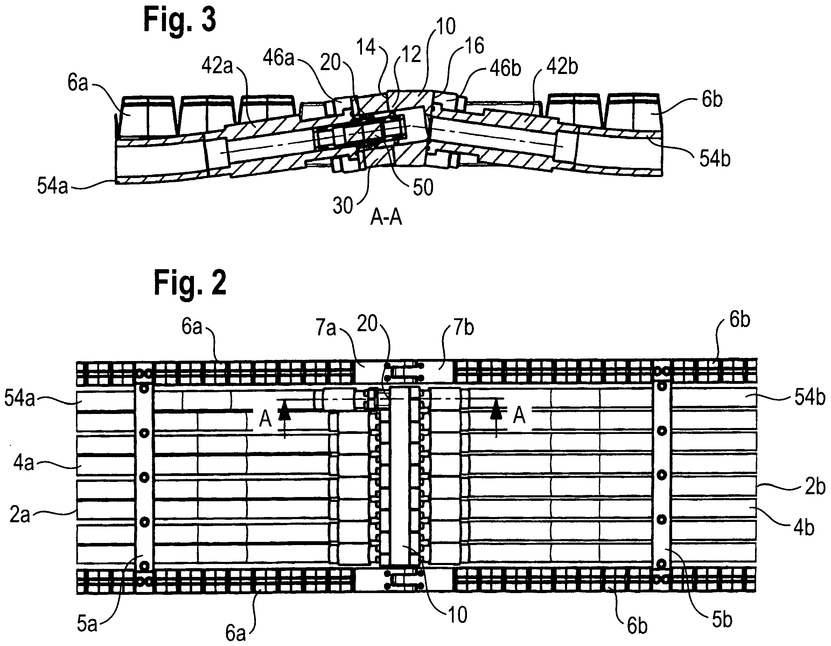

Gemäß den Figuren 1 und 2 ist ein erfindungsgemäßes Schlauchband 1 aus mindestens zwei Schlauchbandstücken 2a, 2b gebildet, welche jeweils eine Vielzahl nebeneinander angeordneter Schläuche 4a, 4b aufweisen. Die bandartig angeordneten Schläuche 4a, 4b zum Leiten eines Fluides, insbesondere eines Hydraulikfluides, sind in regelmäßigen Abständen über Querstege 5a, 5b fest zueinander angeordnet. Zu beiden Seiten der Bandanordnung der Schläuche 4a, 4b sind kettenartige Seitenführungen 6a, 6b vorgesehen. Diese bestehen in bekannter Weise aus blockförmigen Führungselementen mit nach oben gerichteten Nasen und entsprechenden Ausnehmungen an ihrer Unterseite. Die Ausnehmungen an der Unterseite sind in Fig. 1 nicht ersichtlich. Die kettenartigen Seitenführungen 6a, 6b erlauben ein geführtes Aufrollen, wobei die einzelnen Blöcke als Abstandshalter dienen und so ein Quetschen der Schläuche 4a, 4b verhindern.

Die beiden Schlauchbandstücke 2a, 2b sind über einen erfindungsgemäßen Schlauchbandverbinder 10 miteinander verbunden. Die Enden der jeweiligen Schläuche 4a, 4b der beiden Schlauchbandstücke 2a, 2b sind an Verbindungsseiten eines leistenförmigen Flanschträgers 12 des Schlauchbandverbinders 10 lösbar angeflanscht.

Auch die Seitenführungen 6a, 6b der beiden Schlauchbandstücke 2a, 2b sind im Bereich des Schlauchbandverbinders 10 über bekannte Verbindungsglieder 7a, 7b mittels eines Verbindungsbolzens 8 gelenkig miteinander verbunden. Auf diese Weise kann ein erfindungsgemäßes Schlauchband 1 aus einer Vielzahl von Schlauchbandstücken 2 aufgebaut sein. Im Falle einer Beschädigung ist es möglich, lediglich das beschädigte Schlauchbandstück 2 auszubauen und durch ein Ersatz-Schlauchbandstück 2 auszuwechseln.

Nach der Erfindung ist an dem Schlauchbandverbinder 10 eine Aufnahme 20 oder eine Anschlusseinrichtung für eine Steckverbindung für eine Energie- oder Datenleitung vorgesehen, wie dies aus Fig. 2 entnehmbar ist.

Wie der Darstellung gemäß den Figuren 1 und 2 zu entnehmen ist, weist das Schlauchband insgesamt acht Schlauchleitungen auf, wobei sieben Schlauchleitungen mit den Schläuchen 4a, 4b für Hydraulikfluid vorgesehen sind, während ein in Fig. 2 oben dargestellter Schlauch 54a, 54b zur Aufnahme einer elektrischen Leitung ausgebildet ist. Hierzu ist im Unterschied zu den Schläuchen 4a, 4b für das Fluid die Aufnahme 20 am Flanschträger 12 ausgebildet, welcher aus der vergrößerten Schnittdarstellung von Fig. 3 näher ersichtlich ist.

An dem leistenförmigen, prismaartig gestalteten Flanschträger 12 sind eine erste Verbindungsseite 14 und eine gegenüberliegende zweite Verbindungsseite 16 ausgebildet, an welchen die Schlauchleitungen angeflanscht werden. Über entsprechende Durchbrüche oder Durchgangskanäle stehen die gegenüberliegenden Schläuche 4a, 4b in Leitungsverbindung. Dabei sind die Aufnahmeschläuche 54a, 54b mit den Anschlussstücken 42a, 42b, welche für die elektrische Leitung vorgesehen sind, wie die Schläuche 4a, 4b für die Fluidleitungen ausgebildet. Entsprechend werden die gleichen Flanschelemente 46a, 46b, welche standardförmige SAE-Flanschelemente darstellen, zur Schlauchbefestigung verwendet.

Zum Aufnehmen einer Steckverbindung 50 für die elektrischen Leitungen ist am Flanschträger 12 eine Aufnahme 20 ausgebildet, wobei auch eine aus zwei Ringelementen zusammengesetzte Abstandshalterung 30 vorgesehen ist.

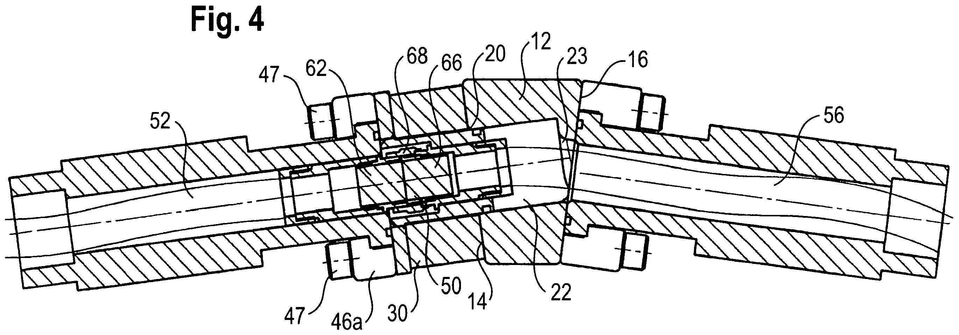

Die Anordnung von Fig. 3 ist in nochmals vergrößerter Darstellung in Fig. 4 gezeigt, wobei auch die erste elektrische Leitung 52 und die zweite elektrische Leitung 56 dargestellt sind. Die Darstellung von Fig. 4 zeigt die Steckverbindung 50 in einem geschlossenen Zustand, bei dem eine elektrische Leitungsverbindung zwischen der ersten elektrischen Leitung 52 und der zweiten elektrischen Leitung 56 hergestellt ist.

Insbesondere ist Fig. 4 zu entnehmen, dass zum Bilden der Aufnahme 20 für die elektrische Steckverbindung 50 der Flanschträger 12, anders als bei den Anschlüssen der Schläuche 4a, 4b für die Fluidleitungen, asymmetrisch ausgebildet ist. Zur ersten Verbindungsseite 14 hin öffnet sich eine Ausnehmung 22, welche in einen Durchgang 23 kleineren Durchmessers zur zweiten Verbindungsseite 16 hin mündet.

Zum Lösen der Steckverbindung 50 werden an der ersten Verbindungsseite 14 des Flanschträgers 12 Verbindungsschrauben 47 gelöst und entfernt, so dass die teilringförmigen Flanschelemente 46a an der ersten Verbindungsseite 14 gelöst und entfernt werden können. Da die Befestigungsschrauben 47 bis in nicht dargestellte Gewindebohrungen in dem Flanschträger 12 reichen, kann nunmehr auch die ringförmige Abstandshalterung 30, welche aus zwei Halbringstücken gebildet ist, entfernt werden.

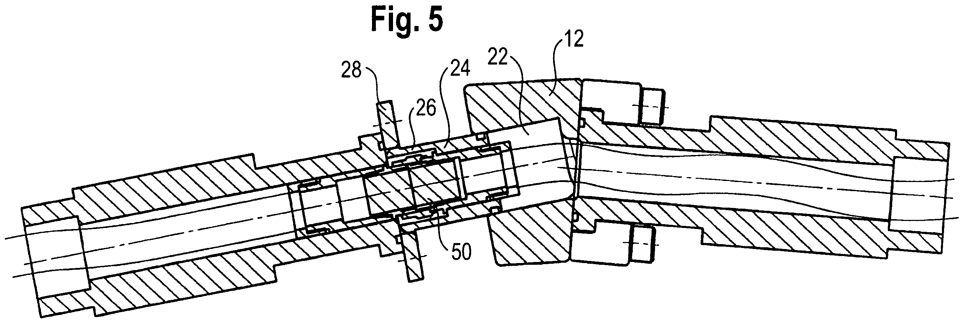

So wird der Zustand erreicht, welcher in Fig. 5 dargestellt ist. In diesem Zustand ist die Steckverbindung 50 weiter von einem Abdeckglied 24 umschlossen, welches eine Hülse 26 mit einem nach außen vorstehenden ringförmigen Kragen 28 aufweist. Aus dieser Verschlussposition kann das Abdeckglied 24 nunmehr in eine Bohrung oder Ausnehmung 22 in dem Flanschträger 12 rückgeschoben werden.

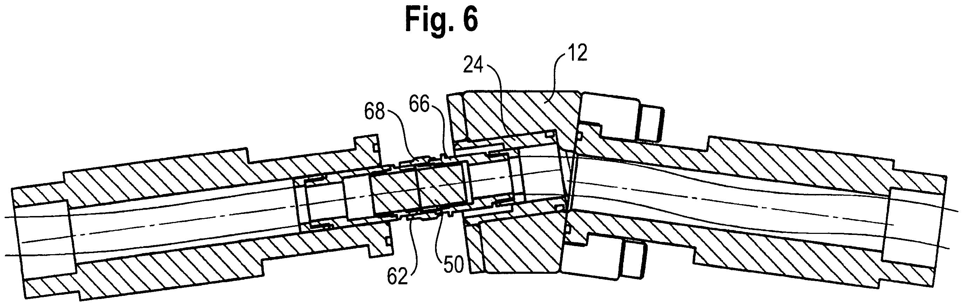

Die so erreichte Freigabeposition ist in Fig. 6 dargestellt. In dieser Freigabeposition ist die Überwurfmutter 68 der Steckverbindung 50 frei zugänglich und kann von Hand oder mit einem entsprechenden Werkzeug betätigt werden. Durch eine entsprechende Verdrehbewegung wird die rohrförmige Überwurfmutter 68 mit einem Innengewinde von einem Außengewinde an dem Stecker 62 gelöst und in Richtung auf den Flanschträger 12 an dem Gegenstecker 66 verschoben.

Nachdem die Schraubverbindung der Überwurfmutter 68 gelöst ist, kann nunmehr der Stecker 62 axial aus dem Gegenstecker 66 gezogen werden, so dass die Verbindung zwischen der ersten elektrischen Leitung 52 und der zweiten elektrischen Leitung 56 unterbrochen ist. Abhängig davon, welches Leitungsstück ausgewechselt werden soll, kann nunmehr entweder die erste elektrische Leitung 52 aus dem Anschlussstück 42a entfernt oder der Gegenstecker 66 mit der zweiten elektrischen Leitung 56 aus dem Flanschträger 12 herausgezogen werden. Ein Schließen der elektrischen Steckverbindung 50 erfolgt in entsprechend umgekehrter Weise, bis das Anschlussstück 42a wieder mit den Flanschelementen 46 und den Befestigungsschrauben 47 an den Flanschträger 12 angeschraubt sind, wobei die Flanschelemente 46 eine entsprechende ringförmige Schulter 44a am Anschlussstück 42a formschlüssig umgreifen.

## Patentansprüche

1. Schlauchbandverbinder zum Verbinden von Schlauchbandstücken (2), welche jeweils mehrere bandartig angeordnete Schläuche (4) für Leitungen aufweisen, mit
- einem Flanschträger (12), welcher eine erste Verbindungsseite (14) und eine zweite Verbindungsseite (16) aufweist, zwischen welchen Durchgänge zur Leitungsverbindung ausgebildet sind, und
- Befestigungseinrichtungen an der ersten Verbindungsseite (14) und der zweiten Verbindungsseite (16) zum Anflanschen der Schläuche (4) der Schlauchbandstücke (2),
- wobei an dem Flanschträger (12) mindestens eine Aufnahme (20) für eine Steckverbindung (50) zwischen einer ersten elektrischen Leitung (52) und einer zweiten elektrischen Leitung (56) ausgebildet ist,
**dadurch gekennzeichnet,**
- **dass** an dem Flanschträger (12) ein Abdeckglied (24) vorgesehen ist, welches zwischen einer Verschlussposition, in welcher die elektrische Steckverbindung (50) abgedeckt ist, und einer Freigabeposition bewegbar ist, in welcher die Steckverbindung (50) zugänglich ist.

2. Schlauchbandverbinder nach Anspruch 1,
**dadurch gekennzeichnet,**
- **dass** die Aufnahme (20) zum Aufnehmen eines Steckers (62) der ersten elektrischen Leitung (52) und eines Gegensteckers (66) der zweiten elektrischen Leitung (56) ausgebildet ist.

3. Schlauchbandverbinder nach Anspruch 1 oder 2,
**dadurch gekennzeichnet,**
- **dass** die Steckverbindung (50) eine Überwurfmutter (68) zum Verbinden von Stecker (62) und Gegenstecker (66) umfasst, wobei die Überwurfmutter (68) in der Freigabeposition des Abdeckgliedes (24) betätigbar ist.

4. Schlauchbandverbinder nach einem der Ansprüche 1 bis 3,
**dadurch gekennzeichnet,**
- **dass** das Abdeckglied (24) eine Hülse (26) mit einem ringförmigen Kragen (28) umfasst und
- **dass** das Abdeckglied (24) verschiebbar in einer Ausnehmung (22) im Flanschträger (12) gelagert ist.

5. Schlauchbandverbinder nach Anspruch 4,
**dadurch gekennzeichnet,**
- **dass** das Abdeckglied (24) in der Verschlussposition durch eine Abstandshalterung (30) gehalten ist, welche zwischen dem Flanschträger (12) und dem ringförmigen Kragen (28) angeordnet ist.

6. Schlauchbandverbinder nach einem der Ansprüche 1 bis 5,
**dadurch gekennzeichnet,**
- **dass** an dem Abdeckglied (24) eine Befestigungseinrichtung für eine elektrische Leitung (52) vorgesehen ist.

7. Schlauchbandverbinder nach einem der Ansprüche 1 bis 6,
**dadurch gekennzeichnet,**
- **dass** die Befestigungseinrichtung für eine elektrische Leitung (52) der Befestigungseinrichtung für die Schläuche (4) für Leitungen entspricht.

8. Schlauchband aus mindestens zwei Schlauchbandstücken (2) mit mehreren bandartig angeordneten Schläuchen (4), wobei die Schlauchbandstücke (2) mit einem Schlauchbandverbinder (10) nach einem der Ansprüche 1 bis 7 miteinander verbunden sind, **dadurch gekennzeichnet,**
- **dass** mindestens eine erste elektrische Leitung (52) und eine zweite elektrische Leitung (56) vorgesehen sind, welche über eine Steckverbindung (50) miteinander verbunden sind, und
- **dass** die Steckverbindung (50) in einer Aufnahme (20) an dem Flanschträger (12) angeordnet ist.

9. Schlauchband nach Anspruch 8,
**dadurch gekennzeichnet,**
- **dass** die Schläuche (4) für die Leitungen jeweils an ihren Enden Anschlussstücke aufweisen, welche mit Flanschelementen (46) an dem Flanschträger (12) befestigbar sind.

10. Schlauchband nach Anspruch 9,
**dadurch gekennzeichnet,**
- **dass** zumindest eine elektrische Leitung (52, 56) von einem Schlauch (54) mit einem Anschlussstück (42) umgeben ist, welches mit einem Flanschelement (46) befestigbar ist.

11. Baumaschine, insbesondere Schlitzwandfräse,
**dadurch gekennzeichnet,**
- **dass** sie ein Schlauchband (1) nach einem der Ansprüche 8 bis 10 aufweist.

## Claims

1. Hose band connector for connecting hose band elements (2) which each comprise a plurality of hoses (4), arranged in a band, for lines, with
- a flange carrier (12) which comprises a first connecting side (14) and a second connecting side (16), between which passages are formed for a line connection, and
- fixing devices on the first connecting side (14) and the second connecting side (16) for flanging the hoses (4) of the hose band elements (2),
- wherein at least one receiving element (20) for a plug-type connection (50) between a first electric line (52) and a second electric line (56) is formed on the flange carrier (12),
**characterised in that**
- a cover member (24) is provided on the flange carrier (12) and can be moved between a closed position, in which the electric plug-type connection (50) is covered, and a released position, in which the plug-type connection (50) is accessible.

2. Hose band connector according to claim 1,
**characterised in that**
- the receiving element (20) is designed to receive a plug (62) of the first electric line (52) and a mating plug (66) of the second electric line (56).

3. Hose band connector according to claim 1 or 2,
**characterised in that**
- the plug-type connection (50) comprises a clamping nut (68) for connecting the plug (62) and the mating plug (66), whereby the clamping nut (68) can be actuated in the released position of the cover member (24).

4. Hose band connector according to any one of claims 1 to 3,
**characterised in that**
- the cover member (24) comprises a sleeve (26) with an annular collar (28) and
- the cover member (24) is mounted so as to be displaceable in a recess (22) in the flange carrier (12).

5. Hose band connector according to claim 4,
**characterised in that**
- the cover member (24) is held in the closed position by a spacer (30) which is arranged between the flange carrier (12) and the annular collar (28).

6. Hose band connector according to one of the claims 1 to 5,
**characterised in that**
- a fixing device for an electric line (52) is provided on the cover member (24).

7. Hose band connector according to one of the claims 1 to 6,
**characterised in that**
- the fixing device for an electric line (52) corresponds to the fixing device for the hoses (4) for lines.

8. Hose band comprising at least two hose band elements (2) with a plurality of hoses (4) arranged in a band, whereby the hose band elements (2) are connected to each other with a hose band connector (10) according to any of claims 1 to 7,
**characterised in that**
- at least a first electric line (52) and a second electric line (56) are provided, which are connected to each other via a plug-type connection (50), and
- the plug-type connection (50) is arranged in a receiving element (20) on the flange carrier (12).

9. Hose band according to claim 8,
**characterised in that**
- the hoses (4) for the lines each have connection elements at their ends which can be fixed with flange elements (46) on the flange carrier (12).

10. Hose band according to claim 9,
**characterised in that**
- at least one electric line (52, 56) is surrounded by a hose (54) with a connection element (42) which can be fixed with a flange element (46).

11. Construction equipment, in particular a trench wall cutter,
**characterised in that**
- it has a hose band (1) according to one of the claims 8 to 10.

## Revendications

1. Connecteur de bande de gaine servant à connecter des pièces de bande de gaine (2), qui présentent respectivement plusieurs gaines (4) disposées à la manière d'une bande pour des conduites, comprenant
- un support de bride (12), qui présente un premier côté de connexion (14) et un deuxième côté de connexion (16), entre lesquels des passages sont réalisés pour la connexion de conduites, et
- des dispositifs de fixation au niveau du premier côté de connexion (14) et du deuxième côté de connexion (16) servant à brider les gaines (4) des pièces de bande de gaine (2),
- dans lequel au moins un logement (20) pour une connexion enfichable (50) entre une première conduite (52) électrique et une deuxième conduite (56) électrique est réalisé au niveau du support de bride (12),
**caractérisé**
- **en ce qu'**est prévu, au niveau du support de bride (12), un organe de recouvrement (24), qui peut être déplacé entre une position de fermeture, dans laquelle la connexion enfichable électrique (50) est recouverte, et une position de dégagement, dans laquelle la connexion enfichable (50) est accessible.

2. Connecteur de bande de gaine selon la revendication 1,
**caractérisé**
- **en ce que** le logement (20) est réalisé afin de recevoir une fiche mâle (62) de la première conduite (52) électrique et une fiche mâle complémentaire (66) de la deuxième conduite (56) électrique.

3. Connecteur de bande de gaine selon la revendication 1 ou 2,
**caractérisé**
- **en ce que** la connexion enfichable (50) comprend un écrou-raccord (68) servant à raccorder la fiche mâle (62) et la fiche mâle opposée (66), dans lequel l'écrou-raccord (68) peut être actionné dans la position de dégagement de l'organe de recouvrement (24).

4. Connecteur de bande de gaine selon l'une quelconque des revendications 1 à 3,
**caractérisé**
- **en ce que** l'organe de recouvrement (24) comprend une douille (26) pourvue d'un collet (28) de forme annulaire, et
- **en ce que** l'organe de recouvrement (24) est monté de manière à pouvoir être coulissé dans un évidement (22) dans le support de bride (12).

5. Connecteur de bande de gaine selon la revendication 4,
**caractérisé**
- **en ce que** l'organe de recouvrement (24) est maintenu dans la position de fermeture par un écarteur (30), qui est disposé entre le support de bride (12) et le collet (28) de forme annulaire.

6. Connecteur de bande de gaine selon l'une des revendications 1 à 5,
**caractérisé**
- **en ce qu'**un dispositif de fixation pour une conduite (52) électrique est prévu au niveau de l'organe de recouvrement (24).

7. Connecteur de bande de gaine selon l'une quelconque des revendications 1 à 6,
**caractérisé**
- **en ce que** le dispositif de fixation pour une conduite (52) électrique correspond au dispositif de fixation pour les gaines (4) pour des conduites.

8. Bande de gaine composée d'au moins deux pièces de bande de gaine (2) comprenant plusieurs gaines (4) disposées à la manière d'une bande, dans laquelle les pièces de bande de gaine (2) sont connectées entre elles par un connecteur de bande de gaine (10) selon l'une des revendications 1 à 7,
**caractérisée**
- **en ce que** sont prévues au moins une première conduite (52) électrique et une deuxième conduite (56) électrique, lesquelles sont raccordées l'une à l'autre par l'intermédiaire d'une connexion enfichable (50), et
- **en ce que** la connexion enfichable (50) est disposée dans un logement (20) au niveau du support de bride (12).

9. Bande de gaine selon la revendication 8,
**caractérisée**
- **en ce que** les gaines (4) pour les conduites présentent respectivement au niveau de leurs extrémités des pièces de raccordement, qui peuvent être fixées par des éléments de bride (46) au niveau du support de bride (12).

10. Bande de gaine selon la revendication 9,
**caractérisée**
- **en ce qu'**au moins une conduite (52, 56) électrique est entourée par une gaine (54) pourvue d'une pièce de raccordement (42), qui peut être fixée par un élément de bride (46).

11. Machine de chantier, en particulier fraise pour parois moulées,
**caractérisée**
- **en ce qu'**elle présente une bande de gaine (1) selon l'une des revendications 8 à 10.
